# FASCICULE DE BREVET EUROPEEN

(11) **EP 3 134 901 B1**
(45) Date de publication et mention de la délivrance du brevet: **16.05.2018**
(21) Numéro de dépôt: 15717003.6
(22) Date de dépôt: 17.04.2015
(51) Int. Cl.: G21F 5/08, B65D 81/05, F16F 7/12, B65D 81/107, B65D 85/00

(54) **EMBALLAGE POUR LE TRANSPORT ET/OU L'ENTREPOSAGE DE MATIERES RADIOACTIVES, COMPRENANT UN AMORTISSEUR D'ANGLE A EFFICACITE RENFORCEE**
VERPACKUNG ZUM TRANSPORTIEREN UND/ODER LAGERN VON RADIOAKTIVEM MATERIAL MIT EINEM WIRKSAMEREN ECKSTOSSDÄMPFER
PACKAGING FOR TRANSPORTING AND/OR STORING RADIOACTIVE MATERIAL, COMPRISING A MORE EFFECTIVE CORNER SHOCK ABSORBER

(30) Priorité: 22.04.2014 FR 1453588
(43) Date de publication de la demande: 01.03.2017
(73) Titulaire: TN International, 78180 Montigny Le Bretonneux (FR)
(72) Inventeur: COLLIN, Fabien, 78990 Elancourt (FR); ANDRODIAS, Hugo, 78000 Versailles (FR); RIPERT, Hervé, 75015 Paris (FR); PARIS, Aude, 78280 Guyancourt (FR)
(74) Mandataire: Brevalex
(86) Numéro de dépôt international: PCT/EP2015/058414
(87) Numéro de publication internationale: WO 2015/162065

(56) Documents cités:
- FR-A- 2 487 565
- JP-A- 2005 321 304
- US-A- 5 175 041

## Description

### DOMAINE TECHNIQUE

La présente invention se rapporte au domaine des emballages de transport et/ou d'entreposage de matières radioactives, comme des déchets radioactifs ou des assemblages de combustible nucléaire, neufs ou irradiés. Elle concerne plus particulièrement les amortisseurs équipant le corps d'emballage, et plus précisément les amortisseurs recouvrant les arêtes définies sur la surface extérieure de ce corps d'emballage.

### ÉTAT DE LA TECHNIQUE ANTÉRIEURE

Un colis d'entreposage et/ou de transport de matières radioactives comporte généralement, en tant qu'enveloppe extérieure, un emballage comprenant un corps d'emballage. Ce dernier, formé d'un corps latéral, d'un fond et d'un couvercle, définit une cavité de logement d'un ensemble renfermant des matières radioactives, par exemple un panier logeant des assemblages de combustible nucléaire ou des étuis de déchets.

La démonstration de sûreté de l'emballage chargé des matières radioactives se fonde en particulier sur des épreuves réglementaires de chute, telle que la chute d'une hauteur de 9 mètres. Pour satisfaire ces exigences, il est fait en sorte de limiter les déformations plastiques du corps d'emballage, de manière à garantir l'étanchéité de la cavité de logement des matières radioactives.

Pour garantir l'étanchéité de l'enceinte de confinement formée par le corps d'emballage, ce dernier est habituellement équipé de plusieurs amortisseurs. Puisque les directions de chute les plus pénalisantes sont celles correspondant aux droites fictives passant par un centre de gravité de l'emballage et par les points des arêtes présentes sur la surface extérieure du corps d'emballage, des amortisseurs sont agencés de manière à recouvrir partiellement ces arêtes. Il s'agit donc d'amortisseurs d'angle, chacun placé de façon à recouvrir une ou plusieurs arêtes convergentes.

Plusieurs solutions ont été proposées dans l'art antérieur, comme dans les documents FR 2 971 615 et GB 1 480 742 divulguant des amortisseurs de coin recouvrant chacun plusieurs arêtes convergentes. Néanmoins, ces amortisseurs sont sujets à des risques de dégradation par les arêtes en cas de chute, et sont donc susceptibles de présenter une efficacité réduite s'ils ne peuvent pas se déformer convenablement pour absorber une énergie suffisante. Pour tenter de résoudre ce problème, il est possible de mettre en oeuvre des amortisseurs en bois, avec un volume suffisamment important pour atténuer les risques de leur éventuel endommagement par les arêtes. Cependant, dans ce cas de figure, l'encombrement global élevé de l'emballage peut se révéler incompatible avec les contraintes d'exploitation. En outre, les documents FR 2 487 565 et JP 2005 321304 divulguent des emballages pour le transport et/ou l'entreposage de matières radioactives comportant des amortisseurs de choc.

### EXPOSÉ DE L'INVENTION

L'invention a donc pour but de remédier au moins partiellement aux inconvénients mentionnés ci-dessus, relatifs aux réalisations de l'art antérieur.

Pour ce faire, l'invention a pour objet un emballage tel que défini dans la revendication 1.

Avantageusement, l'utilisation d'un matériau métallique pour réaliser la paroi d'amortissement permet de diminuer l'encombrement global de l'amortisseur, notamment en comparaison des solutions connues en bois, présentant des contraintes d'écrasement plus faibles. L'invention se révèle ainsi plus facilement compatible avec les contraintes d'exploitation, qui deviennent toujours plus sévères.

De plus, la présence du premier creux en regard de l'arête permet d'éviter la transmission directe d'efforts à cette arête, en cas de chute orientée selon la direction de la droite fictive précitée. Cela permet de préserver l'arête qui constitue une zone particulièrement sensible du corps d'emballage. Mais, surtout, cela permet de limiter les risques que l'arête endommage l'amortisseur, ce dernier pouvant alors assurer au mieux sa fonction principale d'absorption de l'énergie de chute, c'est-à-dire de limiter les accélérations vues par l'emballage.

Par ailleurs, il est noté qu'en prévoyant le second creux adjacent au premier creux, il est défini ladite paroi métallique d'au moins 5 mm d'épaisseur, qui constitue un élément d'absorption d'énergie par déformation plastique. Une telle paroi est plus susceptible de se déformer plastiquement qu'un bloc de matière, et permet ainsi d'absorber l'énergie désirée même avec des matériaux présentant des contraintes d'écrasement élevées, généralement synonymes de faible encombrement. Grâce à la déformation de la paroi, le corps d'emballage est moins sollicité mécaniquement, et il en résulte une meilleure protection de ce dernier. En outre, comme évoqué ci-dessus, l'amélioration de la protection de l'emballage provient également du fait que la paroi métallique destinée à se déformer pour absorber l'énergie ne vient pas transmettre d'efforts directement sur l'arête sensible, mais transmet des efforts sur celle des première et seconde surfaces extérieures du corps en regard de laquelle se situent le second creux et la paroi métallique. Les risques d'endommagement de l'amortisseur par l'arête sont ainsi considérablement réduits, et cet amortisseur peut ainsi disposer d'une efficacité renforcée tout en présentant un encombrement réduit.

En outre, l'invention prévoit que l'amortisseur présente :
- une première partie en regard de ladite première surface extérieure du corps d'emballage ;
- une seconde partie en regard de ladite seconde surface extérieure du corps d'emballage, la seconde partie étant séparée de la première partie par ledit premier creux ;
cet amortisseur présentant également, associés à au moins l'une desdites première et seconde parties, des moyens d'anti-glissement permettant, en cas de chute sur l'amortisseur, de retenir ladite au moins une des première et seconde parties relativement à sa surface extérieure associée du corps d'emballage, dans une direction l'éloignant de l'arête. Ces moyens d'anti-glissement peuvent être réalisés de diverses manières, par exemple à l'aide de butées en forme de pions, de boulons, etc.

Cette spécificité évite/limite le glissement relatif entre le corps d'emballage et l'amortisseur dans le plan de l'interface, en cas de chute avec une direction de sollicitation telle que l'arête aurait tendance à déchirer l'amortisseur. Le risque d'un tel déchirement est ainsi réduit par l'interdiction / la limitation du glissement de la surface extérieure du corps d'emballage relativement à la partie de l'amortisseur en regard, dans le sens éloignant cette dernière surface de l'arête. La limitation de ce glissement favorise la sollicitation de la paroi métallique d'amortissement séparant les deux creux, qui peut alors se déformer au mieux pour absorber l'énergie de choc en cas de chute. L'étanchéité de l'enceinte de confinement s'en trouve mieux préservée.

De préférence, les moyens d'anti-glissement associés à la première et/ou seconde partie de l'amortisseur s'étendent sur une longueur, selon la direction de l'arête, représentant 70 à 100% de la longueur de ladite paroi métallique selon cette même direction. A cet égard, il est noté qu'il n'est pas nécessairement retenu un parallélisme entre la paroi métallique, l'arête et les moyens d'anti-glissement. L'importante longueur selon laquelle s'étendent ces moyens d'anti-glissement permet de renforcer leur fonction première, et limite ainsi au mieux les risques de déchirement de l'amortisseur par l'arête.

De préférence, au moins l'une desdites première et seconde surfaces extérieures du corps l'emballage présente une rupture de niveau entre deux portions de cette surface extérieure, ladite rupture de niveau étant orientée vers ladite arête,
ladite partie de l'amortisseur, en regard de ladite surface extérieure comprenant la rupture de niveau, comporte une surface de retenue de l'amortisseur coopérant avec ladite rupture de niveau,
et la rupture de niveau et la surface de retenue forment lesdits moyens d'anti-glissement.

Les éléments mis en oeuvre offrent une coopération surfacique entre l'amortisseur et le corps d'emballage, ce qui augmente encore davantage la fonction d'anti-glissement en cas de chute avec une direction de sollicitation telle que l'arête aurait tendance à déchirer l'amortisseur. Il est noté que pour chaque partie de l'amortisseur, les moyens d'anti-glissement peuvent se situer à tout endroit de l'interface entre cette partie d'amortisseur et sa surface extérieure associée du corps d'emballage. Par exemple, ils peuvent se situer sensiblement au centre de cette interface, à l'extrémité de la partie d'amortisseur, ou encore à tout endroit entre ces deux dernières positions.

En outre, il est noté que la rupture de niveau et sa surface de retenue associée sont réalisées par usinages sur leurs éléments respectifs, ou bien obtenus par assemblage de plusieurs pièces.

D'ailleurs, il est noté que la rupture de niveau est orthogonale localement à la surface extérieure qui la définit, ou inclinée relativement à la normale à cette surface extérieure du corps d'emballage.

De préférence, ladite paroi est en acier, encore plus préférentiellement en acier inoxydable. Cela permet de bénéficier d'une contrainte d'écrasement élevée, préférentiellement retenue pour les colis lourds. De ce fait, l'encombrement d'une telle paroi en acier peut être réduit, en particulier son épaisseur et/ou sa longueur, tout en permettant une absorption d'énergie satisfaisante. A cet égard, il est noté que c'est le principe de déformation d'une paroi, par opposition à la déformation d'un bloc massif, qui a ouvert l'opportunité d'utiliser l'acier. Néanmoins, en particulier pour les colis plus légers, d'autres matériaux métalliques peuvent être utilisés, comme l'aluminium et ses alliages.

De préférence, ladite paroi métallique est sensiblement parallèle à l'arête, même si, alternativement, une inclinaison peut être prévue, sans sortir du cadre de l'invention.

De préférence, au moins l'un des premier et second creux est traversé par au moins une nervure de renfort se raccordant sur ladite paroi métallique.

De préférence, la / les nervures de renfort agencées dans le premier creux et la / les nervures de renfort agencées dans le second creux sont agencées dans des plans différents, de préférence en quinconce.

De préférence, la / les nervures de renfort agencées dans le premier creux et la / les nervures de renfort agencées dans le second creux sont agencées sensiblement orthogonalement à la paroi métallique.

De préférence, l'emballage est conçu de sorte que ladite paroi métallique n'est pas traversée par la surface fictive définie par l'ensemble des droites fictives passant par l'arête et par le centre de gravité de l'emballage. L'efficacité de l'invention est alors davantage renforcée.

De préférence, l'emballage est conçu de sorte que lesdits creux, à l'exception de l'éventuelle présence des nervures de renfort, sont laissés vides. Alternativement, ces creux pourraient par exemple être remplis au moins partiellement d'un matériau de remplissage, avec une très faible contrainte d'écrasement en comparaison de celle du matériau métallique utilisée pour la structure amortisseuse. Concrètement, aucune fonction d'amortissement ne serait attachée à ce matériau optionnel de remplissage, dont la fonction consisterait plutôt à limiter les zones de rétention d'eau ou encore à faciliter la décontamination de l'amortisseur. En outre, il est précisé que l'emploi d'un tel matériau d'amortissement peut être prévu en association avec lesdites nervures de renfort, c'est-à-dire que ce matériau remplit au moins partiellement la partie desdits creux non occupés par ces mêmes nervures de renfort.

De préférence, ledit amortisseur est monté de manière amovible sur le corps d'emballage, par exemple à l'aide de boulons et de pions de cisaillement. Par montage amovible, il est entendu que les moyens de fixation utilisés présentent un caractère réversible.

De préférence, l'amortisseur est une structure de protection recouvrant un coin du corps l'emballage, défini par au moins trois arêtes convergentes de la surface extérieure de ce corps. Aussi, il est préférentiellement prévu que l'amortisseur soit équipé de moyens propres à l'invention, permettant de protéger chacune des trois arêtes de la manière exposée précédemment.

De préférence, l'emballage comporte une pluralité d'amortisseurs individuels recouvrant chacun un coin de la surface extérieure du corps d'emballage.

De préférence, le corps d'emballage présente une forme générale polyédrique, par exemple une forme cylindrique de section polygonale, comme un carré, un rectangle, un hexagone, etc.

D'autres avantages et caractéristiques de l'invention apparaîtront dans la description détaillée non limitative ci-dessous.

### BRÈVE DESCRIPTION DES DESSINS

Cette description sera faite au regard des dessins annexés parmi lesquels ;
- la figure 1 représente une vue en perspective d'un emballage de transport et/ou d'entreposage de matières radioactives, selon un mode de réalisation préféré de la présente invention ;
- la figure 2 représente une vue détaillée en perspective d'un amortisseur susceptible d'équiper l'emballage montré sur la figure 1 ;
- la figure 3 représente une vue en coupe transversale de l'amortisseur montré sur la figure précédente ;
- la figure 4 représente une vue en perspective similaire à celle de la figure 2, avec l'amortisseur se présentant selon une alternative de réalisation ;
- la figure 4a est une vue en coupe d'une partie de l'amortisseur et du corps d'emballage montrés sur la figure précédente, avec une légère modification de conception ;
- la figure 5 représente une vue en coupe similaire à celle de la figure 3, avec l'amortisseur se présentant selon une autre alternative de réalisation ;
- la figure 6 représente une vue en coupe similaire à celle de la figure 3, avec l'amortisseur se présentant selon encore une autre alternative de réalisation ;
- la figure 7 représente une vue en perspective similaire à celle de la figure 2, avec l'amortisseur se présentant selon encore une autre alternative de réalisation ; et
- la figure 8 montre une vue agrandie en perspective de l'un des amortisseurs de coin équipant l'emballage montré sur la figure 1.

### EXPOSÉ DÉTAILLÉ DE MODES DE RÉALISATION PARTICULIERS

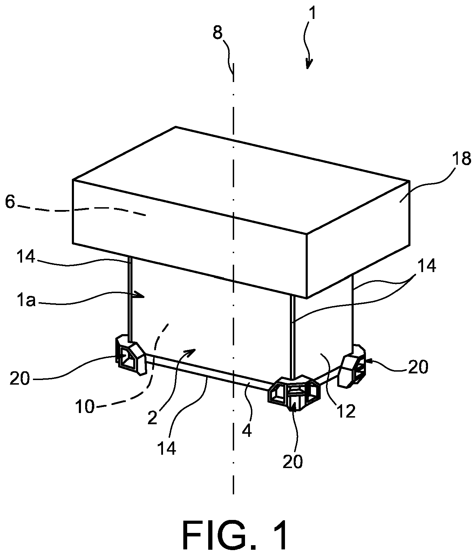

En référence tout d'abord à la figure 1, il est représenté un emballage 1 d'entreposage et/ou de transport de matières radioactives, sous la forme d'un mode de réalisation préféré de la présente invention.

L'emballage 1 comporte un corps d'emballage la pourvu d'un corps latéral 2, d'un fond 4 et d'un couvercle 6 obturant une ouverture de l'emballage opposée au fond 4. L'emballage présente un axe longitudinal 8 centré par rapport au corps latéral 2, et traversant le couvercle ainsi que le fond de ce même emballage. De manière connue, le corps d'emballage la forme une enveloppe extérieure définissant une cavité 10 servant au logement des matières radioactives (non représentées). La cavité 10 est une enceinte dans laquelle sont confinées ces matières radioactives, qui peuvent être des pièces métalliques irradiées, des assemblages de combustible nucléaire irradiés, etc. Ensemble, l'emballage 1 et les matières radioactives confinées dans la cavité 10 forment un colis.

Le corps d'emballage la dispose d'une forme générale polyédrique. Dans le mode de réalisation représenté, il s'agit d'une forme cylindrique d'axe 8, de section rectangulaire. Quelle que soit la forme adoptée, la surface extérieure 12 du corps d'emballage la présente des arêtes 14 entre les différentes faces. Des amortisseurs 18, 20 sont agencés au niveau de ces arêtes. Ces amortisseurs sont prévus de façon à garantir l'étanchéité de l'enceinte de confinement formée par le corps d'emballage, en cas de chute de l'emballage. Plus précisément, il s'agit tout d'abord d'un capot amortisseur 18 comprenant du bois comme matériau amortisseur et recouvrant l'intégralité de l'extrémité supérieure du corps d'emballage la. Par extrémité supérieure, il est ici entendu l'extrémité haute du corps d'emballage lorsque ce dernier se situe en position de transport et/ou entreposage telle que représentée sur la figure 1, à savoir avec le couvercle 6 se trouvant au-dessus du fond 4. Ce capot en bois recouvre donc les quatre arêtes supérieures du corps 1a, formant ensemble la section rectangulaire du corps. Sa conception est classique et connue de l'homme du métier, et ne sera donc pas davantage décrite.

En revanche, au niveau de l'extrémité inférieure du corps d'emballage 1a, l'emballage 1 est équipé d'une pluralité d'amortisseurs individuels 20, c'est-à-dire indépendants et espacés les uns des autres, chacun monté sur un coin de la forme polyédrique. Aussi, il est prévu quatre amortisseurs 20 propres à la présente invention, chacun recouvrant un coin de l'extrémité inférieure du corps la. A cet égard, il est noté qu'ici, chaque coin est formé par trois portions d'arêtes 14 qui convergent en un même point.

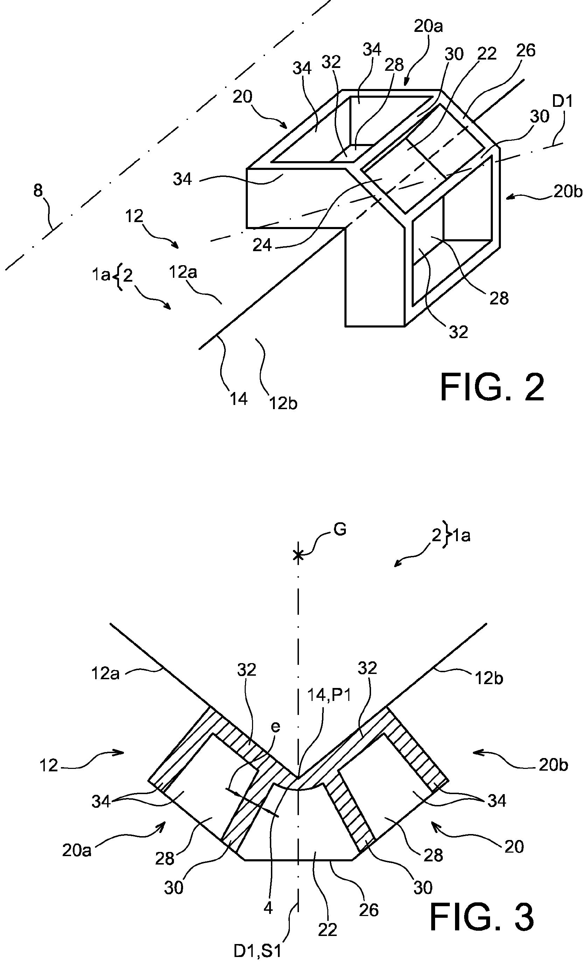

La conception de ces amortisseurs individuels 20 va être détaillée ci-dessous. Néanmoins, il est noté que l'invention s'applique également à des amortisseurs prévus pour recouvrir qu'une seule arête ou portion d'arête, comme cela est le cas pour les réalisations montrées sur les figures 2 à 7. Dans ce cas de figure, les amortisseurs concernés pourraient non seulement se situer au niveau de l'extrémité inférieure du corps 1a, mais également au niveau de son extrémité supérieure, et/ou encore à un niveau quelconque sur les arêtes 14 du corps latéral 2. De même, les amortisseurs de coin 20 montrés sur la figure 1 pourraient aussi équiper l'extrémité supérieure du corps d'emballage la à la place du capot amortisseur 18, sans sortir du cadre de l'invention.

En référence aux figures 2 et 3, il est représenté un premier exemple de réalisation pour l'amortisseur 20. Ici, l'amortisseur 20 recouvre une partie de l'une des arêtes 14 du corps latéral 2, parallèle à l'axe 8. Cette arête sépare deux portions de la surface extérieure 12 du corps latéral 2, ci-après dénommées première surface extérieure 12a et seconde surface extérieure 12b. Il s'agit concrètement des deux faces planes contigües, délimitées en partie par l'arête 14 concernée. La partie de l'arête recouverte par l'amortisseur 20 représente moins de 40% de la longueur de l'arête.

Bien que cela n'ait pas été représenté, l'amortisseur 20 est monté de manière amovible sur le corps d'emballage 1a, par exemple à l'aide de boulons et de pions de cisaillement. Ces éléments de fixation réversibles sont de préférence agencés orthogonalement aux surfaces 12a, 12b. Leur caractère amovible permet de retirer les amortisseurs lorsque ces derniers ne sont plus nécessaires, par exemple en configuration d'entreposage.

L'amortisseur 20 comporte deux parties solidaires l'une de l'autre, par exemple réalisées d'une seule pièce à partir d'un bloc massif, et respectivement dites première partie 20a et seconde partie 20b. La première partie 20a recouvre une portion de la première surface 12a, tandis que la seconde partie 20b de l'amortisseur recouvre une portion de la seconde surface 12b. Entre les deux parties 20a, 20b de l'amortisseur, il est prévu un premier creux 22 au droit de l'arête 14. Ce premier creux 22 est traversé par une droite fictive D1 passant par un centre de gravité G de l'emballage, et par un point P1 de l'arête 14. Plus généralement, ce premier creux 22 est traversé par la surface fictive S1 définie par l'ensemble des droites fictives passant par l'arête 14 et par le centre de gravité G de l'emballage.

Au niveau de ce premier creux 22 situé à la jonction entre les deux parties 20a, 20b de l'amortisseur, ce dernier ne présente qu'un ligament de matière 24 épousant l'arête 14. En allant vers l'extérieur dans la direction de la droite fictive D1, à partir du ligament 24, l'amortisseur reste entièrement vide. Il s'ouvre sur une surface d'extrémité 26 qui forme le contour du creux 22 et qui prend de préférence la forme d'une surface plane orthogonale à la surface fictive S1. Aussi, cette surface d'extrémité 26 est considérée comme biseautée, car elle forme un angle d'environ 45° avec chacune des deux surfaces 12a, 12b sensiblement orthogonales entre elles. Elle forme également un angle d'environ 45° avec la surface extérieure de chacune des deux parties 20a, 20b de l'amortisseur. Dans le mode de de réalisation représenté, ces parties 20a, 20b sont sensiblement symétriques relativement à la surface fictive S1. Par conséquent, il ne sera fait la description détaillée que de la première partie 20a, la seconde partie 20b devant être considérée de conception identique ou similaire. Notamment, lorsqu'elles ne sont pas identiques, ces parties 20a, 20b peuvent présenter des dimensions différentes.

La première partie 20a de l'amortisseur 20 comporte un second creux 28, agencé en regard de la première surface extérieure 12a. Ce second creux 28 est séparé du premier creux 22 par une paroi métallique 30 spécifique à l'invention. Cette paroi 30, parallèle à l'arête 14, s'étend vers l'extérieur du corps la à partir d'un fond 32 de la première partie 20a, plaquée contre la surface 12a. La paroi 30 délimite donc les premier et second creux 22, 28, en présentant une épaisseur « e » supérieure à 5 mm, et de préférence comprise entre 10 et 50 mm.

Le contour du creux 28 est aussi délimité par des parois périphériques 34 s'étendant également vers l'extérieur à partir du fond 32. Les quatre parois 30, 32 délimitent alors un creux 28 de forme sensiblement parallélépipédique, qui reste entièrement vide. Il s'ouvre sur une surface extérieure de la première partie 20a de l'amortisseur, parallèle à la surface extérieure 12a du corps latéral 2.

La paroi métallique 30 est agencée de sorte à ne pas être traversée par la surface fictive S1, comme cela est schématisé sur la figure 3. Aussi, en cas de chute de l'emballage selon l'une quelconque des droites fictives constituant cette surface S1, la paroi métallique 30 est prévue pour amortir cette chute en se déformant plastiquement, sans solliciter directement l'arête 14 décalée de cette paroi 30. En d'autres termes, la présence du creux 22 en regard de l'arête 14 permet d'éviter la transmission directe d'efforts importants à cette arête, et de limiter ainsi les déformations plastiques de cette zone sensible. En effet, cela limite les risques que l'arête 14 endommage l'amortisseur en cas de chute, puisque la contre-réaction de l'arête sur ce dernier reste faible. L'amortisseur 20 peut alors assurer au mieux sa fonction principale d'absorption de l'énergie de chute par déformation plastique des deux parois 30 des parties 20a, 20b, et limiter ainsi convenablement les accélérations vues par l'emballage.

Les deux parois 30 sont symétriques par rapport à la surface fictive S1. Les creux 22, 28 situés de part et d'autre de ces parois autorisent la déformation de celles-ci, principalement par écrasement / compression selon la direction de leur hauteur. Tout comme l'ensemble des éléments des deux parties 20a, 20b de l'amortisseur, les parois 30 sont de préférence réalisées en acier inoxydable, avec une contrainte d'écrasement de l'ordre de 200 MPa. Cette contrainte élevée, associée à l'épaisseur et la hauteur adaptées des parois 30, permet une absorption d'énergie satisfaisante. A ce titre, le ratio entre l'épaisseur et la hauteur des parois 30 est préférentiellement supérieur à 0,5.

Comme indiqué ci-dessus, les creux 22, 28 sont préférentiellement laissés vides. Néanmoins, un matériau de remplissage peut remplir tout ou partie de ces creux, par exemple afin de faciliter la décontamination de l'amortisseur. Ce matériau de remplissage viendrait alors compléter les deux parties 20a, 20b formant la structure amortisseuse de l'amortisseur, préférentiellement réalisée d'un seul tenant à partir d'un bloc massif en acier ou dans tout autre matériau métallique jugé approprié en fonction de la masse totale de l'emballage à amortir. Néanmoins, ce matériau serait préférentiellement choisi avec une contrainte d'écrasement suffisamment faible pour n'assurer aucune fonction d'amortissement en cas de chute de l'emballage, ou seulement un amortissement négligeable, et surtout de manière à ne pas gêner l'écrasement des parois adjacentes 30, destinées à absorber l'énergie de chute par déformation plastique. A cet égard, il est noté que le rapport entre la contrainte d'écrasement du matériau utilisé pour la structure amortisseuse métallique et la contrainte d'écrasement du matériau de remplissage, est de préférence supérieur à 30, et encore plus préférentiellement supérieur à 50. C'est notamment le cas lors de l'utilisation combinée de l'acier et d'une mousse.

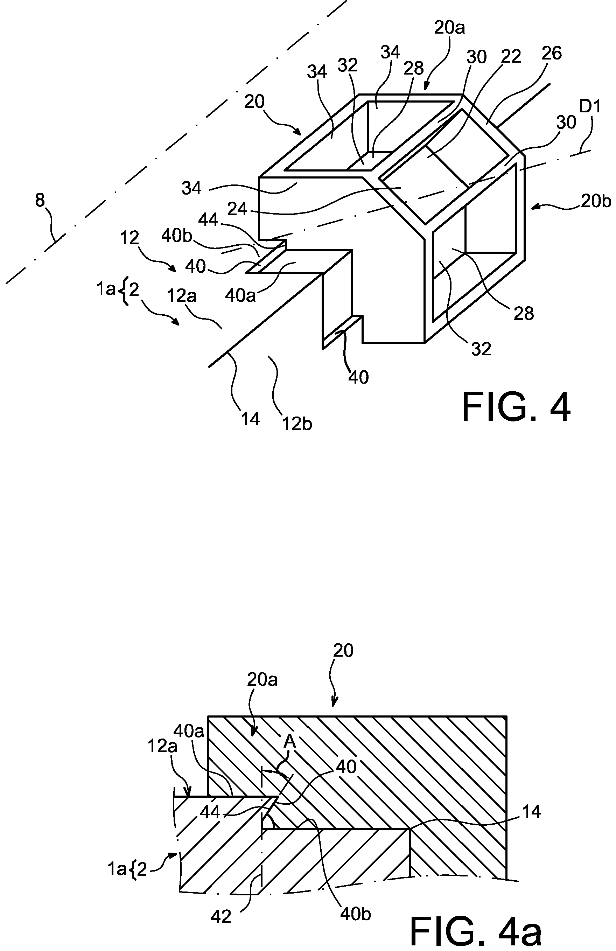

Sur la figure 4, il a été représenté un autre exemple de réalisation pour l'amortisseur 20 et la surface extérieure 12 du corps latéral 2. La seule différence avec la réalisation précédente réside dans la conception de l'interface entre les première et seconde parties 20a, 20b et leurs surfaces extérieures respectives 12a, 12b. En effet, il est ici prévu des moyens d'anti-glissement permettant de limiter encore davantage le risque de déchirement de l'amortisseur 20 par l'arête 14. Pour ce faire, des moyens d'anti-glissement identiques ou similaires sont prévus sur chacune des deux parties 20a, 20b de l'amortisseur. Par conséquent, seuls ceux attachés à la première partie 20a seront décrits ci-dessous.

Comme évoqué ci-dessus, les moyens d'anti-glissement sont conçus de telle manière qu'en cas de chute sur l'amortisseur 20 selon la direction de la droite fictive D1, ils permettent de retenir la première partie 20a relativement à sa surface extérieure associée 12a, dans une direction éloignant cette partie 20a de l'arête 14. Pour ce faire, la première surface extérieure 12a présente une rupture de niveau 40, telle qu'une contremarche, entre deux portions 40a, 40b de cette surface extérieure. La rupture de niveau 40, pratiquée localement au niveau de l'amortisseur 20, est orientée vers l'arête 14, par exemple en étant orthogonale localement à la première surface extérieure 12 qui la définit. En d'autres termes, la rupture de niveau 40 est alors orthogonale aux deux portions 40a, 40b qu'elle sépare. Cet exemple est représenté sur la figure 4. Néanmoins, la rupture de niveau 40 pourrait, localement, être inclinée relativement à la normale 42 à cette surface 12a, par exemple d'un angle « A » compris entre 5 et 45°, comme cela a été représenté sur la figure 4a.

Quelle que soit la configuration retenue pour cette rupture de niveau 40 qui est ici parallèle à l'arête 14 et à l'axe 8, cette rupture est associée à une surface de retenue 44 pratiquée sur la partie 20a de l'amortisseur. Ensemble, la rupture 40 et la surface de retenue 44 forment les moyens d'anti-glissement de la partie 20a, en étant en contact surfacique de préférence sur toute la longueur de la paroi 30 dans la direction de l'arête 14, à savoir sur toute la longueur de la partie 20a de l'amortisseur.

En cas de chute avec une direction de sollicitation telle que l'arête 14 aurait tendance à déchirer l'amortisseur en deux parties, la coopération surfacique entre les surfaces complémentaires 40, 44 limite l'éventuel glissement relatif entre la partie 20a et le corps latéral 2, dans le plan de l'interface entre ces deux éléments. En réduisant le risque d'un tel déchirement, il est favorisé la sollicitation de la paroi 30, qui peut alors se déformer au mieux pour absorber l'énergie de choc.

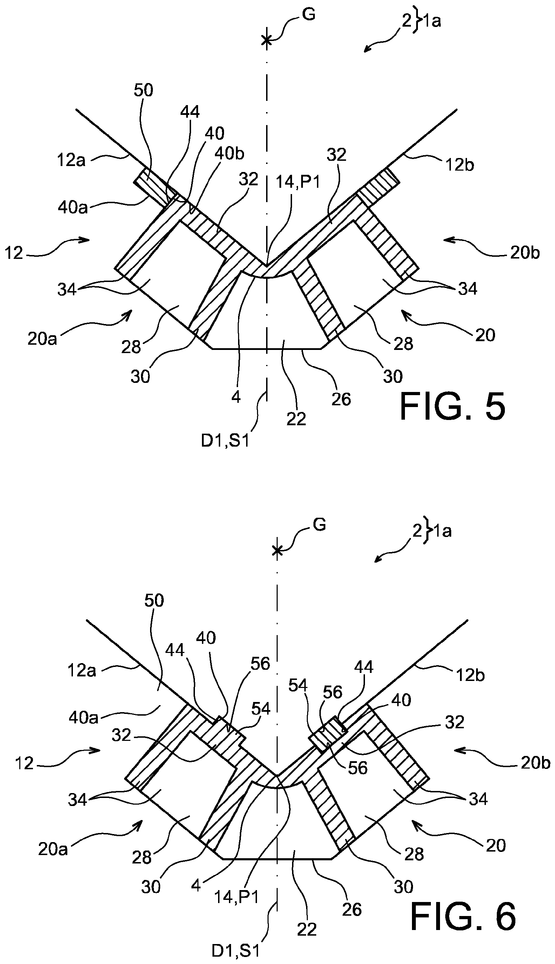

Ces moyens d'anti-glissement peuvent être prévus à tout endroit à l'interface entre la partie 20a et le corps latéral 2. Ils sont légèrement excentrés sur la réalisation de la figure 4, ou situés à une extrémité comme sur l'exemple de la figure 5. Sur celle-ci, la surface intérieure du fond 32 de la partie 20a reste plane, et sa surface de retenue 44 est formée à son extrémité, dans le prolongement de la paroi périphérique 34. La rupture de niveau 40 est quant à elle définie par l'ajout d'un organe 50 en forme de barre sur la première surface 12a, restant également plane, au moins localement. Cette solution contraste donc avec celle de la figure 4, dans laquelle les moyens d'anti-glissement 40, 44 sont réalisés par usinages sur la surface extérieure 12a et sur la surface intérieure du fond 32 de l'amortisseur.

Dans un autre exemple de réalisation montré sur la figure 6, d'autres conceptions sont représentées pour les moyens d'anti-glissement. Pour la partie 20a, le fond 32 dispose d'une barre 54 en saillie vers l'intérieur, de préférence obtenue par usinage du fond 32 de part et d'autre de cette barre 54. Celle-ci présente de préférence une section rectangulaire. Elle est insérée dans une rainure de forme complémentaire 56, prévue sur la surface 12a, et cheminant également parallèlement à l'arête 14. Un flanc latéral de la rainure 56 et un flanc latéral de la barre 54, qui sont en contact surfacique, forment respectivement la rupture de niveau 40 et la surface de retenue 44. Il s'agit des flancs les plus éloignés de l'arête 14. La coopération surfacique des flancs opposés empêche quant à elle l'éjection de l'amortisseur, notamment lors de l'épreuve réglementaire de chute sur poinçon.

Pour la partie 20b, la conception des moyens d'anti-glissement est globalement la même, la seule différence résidant dans la mise en place d'une barre 54 dans deux rainures 56 en regard, prévues respectivement sur la surface 12b et la surface intérieure du fond 32. Ici encore, un flanc latéral de la rainure 56 pratiquée sur la surface 12b, et un flanc latéral de la barre 54, forment respectivement la rupture de niveau 40 et la surface de retenue 44. Il s'agit des flancs les plus éloignés de l'arête 14. La coopération surfacique des flancs opposés empêche elle aussi l'éjection de l'amortisseur. A titre d'exemple, la barre 54 est montée vissée sur le fond 32 de la partie 20b de l'amortisseur, et seulement glissée dans l'autre rainure 56 du corps latéral 2. Alternativement, il est possible de monter la barre 54 dans la rainure 56 du corps latéral 2 et de la glisser dans la rainure 56 de l'amortisseur, sans sortir du cadre de l'invention.

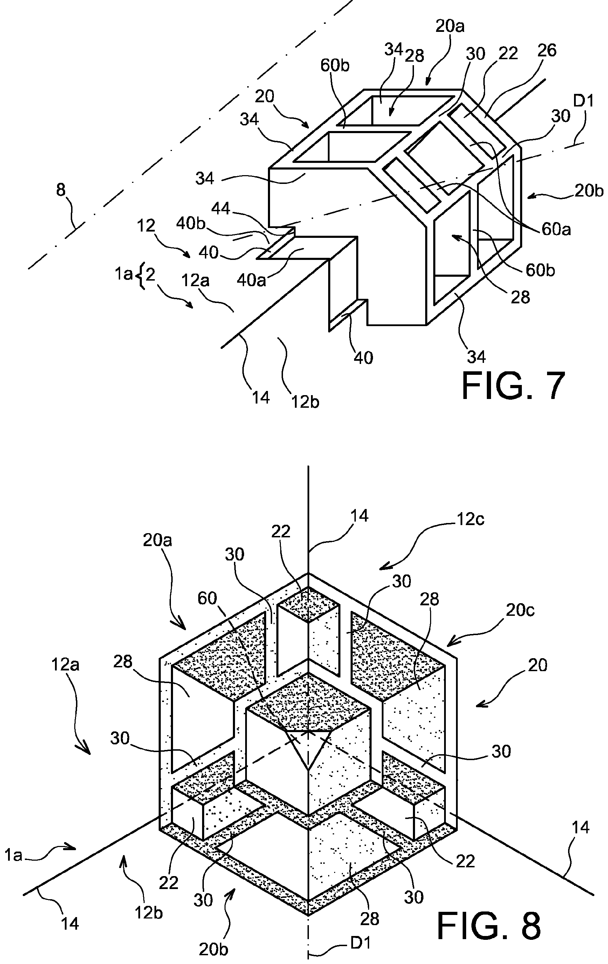

En référence à présent à la figure 7, il est montré une autre alternative de réalisation de l'amortisseur 20, éventuellement combinable avec les précédentes.

Les premier et seconds creux 22, 28 sont ici traversés par des nervures de renfort 60a, 60b, se raccordant sur la paroi d'amortissement 30. Ces nervures sont de préférence réalisées d'une seule pièce avec le reste de la structure amortisseuse 20a, 20b. Elles présentent une hauteur et une épaisseur inférieures ou égales à celles des parois 30. A titre indicatif, le premier creux 22 est équipé de deux nervures 60a agencées sensiblement orthogonalement aux deux parois 30, auxquelles elles sont raccordées à leurs extrémités. Chaque second creux 28 présente quant à lui une unique nervure 60b, aussi agencée sensiblement orthogonalement à la paroi 30 sur laquelle elle se raccorde à l'une de ses deux extrémités. L'autre extrémité de la nervure 60b est quant à elle raccordée sur la paroi périphérique 34 parallèle à la paroi 30 concernée. Les nervures de renfort 60a, 60b sont ainsi agencées dans des plans orthogonaux à la surface fictive S1.

Il est fait en sorte que ces nervures 60a, 60b soient régulièrement réparties au sein de leurs creux 22, 28, et que les nervures 60a soient agencées dans des plans différents de ceux des nervures 60b. Une disposition en quinconce est préférée, comme cela a été représenté sur la figure 7.

Quoi qu'il en soit, à l'intérieur de chaque creux 22, 28, 75 à 95% de la section orthogonale aux parois et nervures est vide, le reste correspondant à l'encombrement des nervures de renfort 60a, 60b.

En cas de chute, ces nervures permettent de maintenir l'orientation des parois 30 afin qu'elles se déforment davantage en s'écrasant qu'en se pliant, pour une meilleure efficacité. Par ailleurs, l'écrasement des nervures, également selon la direction de leur hauteur, participe aussi à l'absorption d'énergie en cas de chute. A cet égard, il est noté que les parois 30 servent aussi à maintenir l'orientation des nervures 60a, 60b, pour éviter qu'elles plient au lieu de s'écraser.

Enfin, la figure 8 montre un exemple de réalisation d'un amortisseur de coin 20 destiné à recouvrir un coin 60 du corps d'emballage la. Au lieu de protéger deux faces séparées par une arête, cet amortisseur 20 protège trois faces 12a, 12b, 12c séparées par trois arêtes 14 qui convergent en un point. Ici, les trois faces sont orthogonales entre elles.

L'amortisseur 20 comporte donc une structure amortisseuse avec trois parties 20a, 20b, 20c, chacune de conception identique ou similaire à celle des parties 20a, 20b de l'amortisseur décrit en référence aux figures 2 à 7. Aussi, chaque partie 20a, 20b, 20c présente au moins une paroi amortisseuse 30 excentrée de son arête associée 14, chaque paroi 30 délimitant de part et d'autre de celle-ci un premier creux 22 ainsi qu'un second creux 28. Néanmoins, sur cet amortisseur, le principe propre à l'invention pourrait être appliqué qu'à seulement une ou deux arêtes parmi les trois arêtes formant le coin 60, sans sortir du cadre de l'invention.

Bien entendu, diverses modifications peuvent être apportées par l'homme du métier à l'invention qui vient d'être décrite, uniquement à titre d'exemples non limitatifs. L'invention est définie dans la revendication 1.

## Revendications

1. Emballage (1) pour le transport et/ou l'entreposage de matières radioactives comprenant un corps d'emballage (1a) définissant intérieurement une cavité (10) de logement desdites matières radioactives, ainsi qu'au moins un amortisseur de choc (20) rapporté extérieurement sur le corps d'emballage,
le corps d'emballage (1a) comportant une surface extérieure (12) pourvue d'au moins une première surface extérieure (12a) et une seconde surface extérieure (12b) séparées par une arête (14) recouverte par ledit amortisseur (20),
ledit amortisseur (20) comportant une structure amortisseuse métallique comprenant :
a) un premier creux (22) traversé par une droite fictive (D1) passant par un centre de gravité (G) de l'emballage et par un point (P1) de l'arête (14) ;
b) un second creux (28) agencé en regard de l'une des première et seconde surfaces extérieures (12a, 12b) ; et
c) une paroi métallique (30) d'amortissement par déformation plastique, d'au moins 5 mm d'épaisseur et délimitant de part et d'autre de celle-ci les premier et second creux (22, 28), ledit amortisseur (20) présentant:
- une première partie (20a) en regard de ladite première surface extérieure (12a) du corps d'emballage (1a) ;
- une seconde partie (20b) en regard de ladite seconde surface extérieure (12b) du corps d'emballage (1a), la seconde partie étant séparée de la première partie par ledit premier creux (22) ; l'emballage pour le transport et/ou l'entreposage de matières radioactives étant **caractérisé en ce que** l'amortisseur présente, associés à chacune desdites première et seconde parties (20a, 20b), des moyens d'anti-glissement permettant, en cas de chute sur l'amortisseur (20), de retenir ladite au moins une des première et seconde parties (20a, 20b) relativement à sa surface extérieure associée (12a, 12b) du corps d'emballage, dans une direction l'éloignant de l'arête (14).

2. Emballage selon la revendication 1, **caractérisé en ce qu'**il est conçu de sorte que lesdits creux (22, 28), à l'exception de l'éventuelle présence des nervures de renfort (60a, 60b), sont laissés vides, et/ou ce que ces creux (22, 28) sont remplis au moins partiellement d'un matériau de remplissage.

3. Emballage selon la revendication 1 ou la revendication 2, **caractérisé en ce que** les moyens d'anti-glissement associés à la première et/ou seconde partie (20a, 20b) de l'amortisseur s'étendent sur une longueur, selon la direction de l'arête (14), représentant 70 à 100% de la longueur de ladite paroi métallique (30) selon cette même direction.

4. Emballage selon la revendication l'une quelconque des revendications précédentes, **caractérisé**
**en ce qu'**au moins l'une desdites première et seconde surfaces extérieures (12a, 12b) du corps d'emballage (1a) présente une rupture de niveau (40) entre deux portions (40a, 40b) de cette surface extérieure, ladite rupture de niveau étant orientée vers ladite arête (14),
**en ce que** ladite partie (20a, 20b) de l'amortisseur, en regard de ladite surface extérieure (12a, 12b) comprenant la rupture de niveau (40), comporte une surface (44) de retenue de l'amortisseur coopérant avec ladite rupture de niveau (40),
et **en ce que** la rupture de niveau (40) et la surface de retenue (44) forment lesdits moyens d'anti-glissement.

5. Emballage selon la revendication précédente, **caractérisé en ce que** ladite rupture de niveau (40) est orthogonale localement à la surface extérieure (12a, 12b) qui la définit, ou inclinée relativement à la normale (42) à cette surface extérieure du corps d'emballage.

6. Emballage selon l'une quelconque des revendications précédentes, **caractérisé en ce que** ladite paroi métallique (30) est en acier.

7. Emballage selon l'une quelconque des revendications précédentes, **caractérisé en ce que** ladite paroi métallique (30) est sensiblement parallèle à l'arête (14).

8. Emballage selon l'une quelconque des revendications précédentes, **caractérisé en ce que** qu'au moins l'un des premier et second creux (22, 28) est traversé par au moins une nervure de renfort (60a, 60b) se raccordant sur ladite paroi métallique (30).

9. Emballage selon la revendication précédente, **caractérisé en ce que** la / les nervures de renfort (60a) agencées dans le premier creux (22) et la / les nervures de renfort (60b) agencées dans le second creux (28) sont agencées dans des plans différents, de préférence en quinconce.

10. Emballage selon la revendication 8 ou la revendication 9, **caractérisé en ce que** la / les nervures de renfort (60a) agencées dans le premier creux (22) et la / les nervures de renfort (60b) agencées dans le second creux (28) sont agencées sensiblement orthogonalement à la paroi métallique (30).

11. Emballage selon l'une quelconque des revendications précédentes, **caractérisé en ce qu'**il est conçu de sorte que ladite paroi métallique (30) n'est pas traversée par la surface fictive (S1) définie par l'ensemble des droites fictives passant par l'arête (14) et par le centre de gravité (G) de l'emballage.

12. Emballage selon l'une quelconque des revendications précédentes, **caractérisé en ce que** ledit amortisseur (20) est monté de manière amovible sur le corps d'emballage (1a), par exemple à l'aide de boulons et de pions de cisaillement.

13. Emballage selon l'une quelconque des revendications précédentes, **caractérisé en ce que** l'amortisseur (20) est une structure de protection recouvrant un coin (60) du corps d'emballage (1a), défini par au moins trois arêtes convergentes (14) de la surface extérieure (12) de ce corps.

14. Emballage selon la revendication précédente, **caractérisé en ce qu'**il comporte une pluralité d'amortisseurs individuels (20) recouvrant chacun un coin (60) de la surface extérieure (12) du corps d'emballage (1a).

15. Emballage selon l'une quelconque des revendications précédentes, **caractérisé en ce que** le corps d'emballage (1a) présente une forme générale polyédrique.

## Patentansprüche

1. Verpackung (1) für den Transport und/oder die Zwischenlagerung von radioaktiven Stoffen, umfassend einen Verpackungskörper (1a), der im Inneren einen Hohlraum (10) zur Aufnahme der radioaktiven Stoffe begrenzt, sowie wenigstens einen Stoßdämpfer (20), der außen an dem Verpackungskörper angebracht ist,
wobei der Verpackungskörper (1a) eine Außenfläche (12) aufweist, die mit wenigstens einer ersten Außenfläche (12a) und einer zweiten Außenfläche (12b) versehen ist, die durch eine von dem Stoßdämpfer (20) bedeckte Kante (14) getrennt sind, wobei der Stoßdämpfer eine metallische Stoßdämpferstruktur aufweist, welche umfasst:
a) eine erste Vertiefung (22) durch die eine gedachte Gerade (D1) verläuft, welche durch einen Schwerpunkt (G) der Verpackung und einen Punkt (P1) der Kante (14) verläuft;
b) eine zweite Vertiefung (28), welche einer aus erster und zweiter Außenfläche (12a, 12b) zugewandt angeordnet ist; und
c) eine Metallwand (30) zur Stoßdämpfung durch plastische Verformung mit einer Dicke von mindestens 5mm, welche auf ihren beiden Seiten die erste und die zweite Vertiefung (22, 28) begrenzt,
wobei der Stoßdämpfer (20) aufweist:
einen ersten der ersten Außenfläche (12a) des Verpackungskörpers (1a) zugewandten Abschnitt (20a);
- einen zweiten, der zweiten Außenfläche (12b) des Verpackungskörpers (1a) zugewandten Abschnitt (20b), wobei der zweite Abschnitt vom ersten Abschnitt durch die erste Vertiefung (22) getrennt ist;
wobei die Verpackung für den Transport und/oder die Zwischenlagerung von radioaktiven Stoffen **dadurch gekennzeichnet ist, dass**
der Stoßdämpfer in Verbindung mit jedem der ersten und zweiten Abschnitte (20a, 20b) Antirutschmittel aufweist, die bei einem Fall auf den Stoßdämpfer ermöglichen, dass der wenigstens eine aus erstem und zweitem Abschnitt (20a, 20b) bezüglich seiner zugehörigen Außenfläche (12a, 12b) des Verpackungskörpers in einer ihn von der Kante (14) wegführenden Richtung gehalten wird.

2. Verpackung nach Anspruch 1, **dadurch gekennzeichnet, dass** sie derart ausgebildet ist, dass die Vertiefungen (22, 28) mit Ausnahme des möglichen Vorliegens von Verstärkungsrippen (60a, 60b) leer gelassen sind und/oder dass diese Vertiefungen wenigstens teilweise mit einem Füllmaterial gefüllt sind.

3. Verpackung nach Anspruch 1 oder Anspruch 2, **dadurch gekennzeichnet, dass** sich die mit dem ersten und/oder dem zweiten Abschnitt (20a, 20b) des Stoßdämpfers verbundenen Antirutschmittel über eine Länge in der Richtung der Kante (14) erstrecken, die 70 bis 100% der Länge der Metallwand (30) in derselben Richtung entspricht.

4. Verpackung einem der vorhergehenden Ansprüche, **dadurch gekennzeichnet, dass** wenigstens eine aus ersten und zweiten Außenflächen (12a, 12b) des Verpackungskörpers (1a) einen Höhenbruch (40) zwischen zwei Abschnitten (40a, 40b) dieser Außenfläche aufweist, wobei der Höhenbruch zu der Kante (14) hin ausgerichtet ist,
dadurch, dass der Abschnitt (20a, 20b) des Stoßdämpfers der den Höhenbruch (40) umfassenden Außenfläche (12a, 12b) zugewandt einen Haltefläche (44) des Stoßdämpfers aufweist, die mit dem Höhenbruch (40) zusammenwirkt,
und dadurch, dass der Höhenbruch (40) und die Haltefläche (44) die Antirutschmittel bilden.

5. Verpackung nach dem vorhergehenden Anspruch, **dadurch gekennzeichnet, dass** der Höhenbruch (40) örtlich orthogonal zu der diesen begrenzenden Außenfläche (12a, 12b) ist, oder zur Normalen (42) an dieser Außenfläche des Verpackungskörpers geneigt ist.

6. Verpackung nach einem der vorhergehenden Ansprüche, **dadurch gekennzeichnet, dass** die Metallwand (30) aus Stahl ist.

7. Verpackung nach einem der vorhergehenden Ansprüche, **dadurch gekennzeichnet, dass** die Metallwand (30) im Wesentlichen parallel zu der Kante (14) ist.

8. Verpackung nach einem der vorhergehenden Ansprüche, **dadurch gekennzeichnet, dass** wenigstens eine aus erster und zweiter Vertiefung (22, 28) von wenigstens einer Verstärkungsrippe (60a, 60b) durchquert wird, die an die Metallwand (30) angeschlossen ist.

9. Verpackung nach dem vorhergehenden Anspruch, **dadurch gekennzeichnet, dass** die in der ersten Vertiefung (22) angeordnete/n Verstärkungsrippe/n (60a) und die in der zweiten Vertiefung (28) angeordnete/n Verstärkungsrippe/n (60b) in verschiedenen Ebenen, bevorzugt versetzt angeordnet sind.

10. Verpackung nach Anspruch 8 oder Anspruch 9, **dadurch gekennzeichnet, dass** die in der ersten Vertiefung (22) angeordnete/n Verstärkungsrippe/n (60a) und die in der zweiten Vertiefung (28) angeordnete/n Verstärkungsrippe/n (60b) im Wesentlichen orthogonal zu der Metallwand (30) angeordnet sind.

11. Verpackung nach einem der vorhergehenden Ansprüche, **dadurch gekennzeichnet, dass** sie derart konzipiert ist, dass die Metallwand (30) nicht von der gedachten Fläche (S1) durchquert wird, die durch die Gruppe der durch die Kante (14) und den Schwerpunkt (G) der Verpackung verlaufenden gedachten Geraden begrenzt wird.

12. Verpackung nach einem der vorhergehenden Ansprüche, **dadurch gekennzeichnet, dass** der Stoßdämpfer (20) entfernbar an dem Verpackungskörper (1a) angebracht ist, beispielsweise mittels Bolzen und Scherungsstiften.

13. Verpackung nach einem der vorhergehenden Ansprüche, **dadurch gekennzeichnet, dass** der Stoßdämpfer (20) eine einen Bereich des Verpackungskörpers (1a) bedeckende Schutzstruktur ist, die durch wenigstens drei konvergierende Kanten (14) der Außenfläche des Körpers (12) begrenzt wird.

14. Verpackung nach dem vorhergehenden Anspruch, **dadurch gekennzeichnet, dass** sie eine Vielzahl einzelner Stoßdämpfer (20) umfasst, die jeweils einen Bereich (60) der Außenfläche (12) des Verpackungskörpers (1a) bedecken.

15. Verpackung nach einem der vorhergehenden Ansprüche, **dadurch gekennzeichnet, dass** der Verpackungskörper (1a) eine allgemeine polyedrische Form aufweist.

## Claims

1. Packaging (1) for transporting and/or storing radioactive material comprising a packaging body (1a) which defines therein a cavity (10) for housing said radioactive material, and at least one shock absorber (20) which is mounted on the outside of the packaging body,
the packaging body (1a) having an outer surface (12) provided with at least one first outer surface (12a) and one second outer surface (12b) which are separated by an edge (14) that is covered by said shock absorber (20),
said shock absorber being including a metal damping structure comprising:
a) a first recess (22) passed through by an imaginary straight line (D1) passing via a centre of gravity (G) of the packaging, and via a point (P1) of the edge (14);
b) a second recess (28) arranged so as to face one of the first and second outer surfaces (12a, 12b); and
c) a metal wall (30) for absorbing shocks by means of plastic deformation. Said wall is at least 5 mm thick and defines the first and second recesses (22, 28) on either side thereof,
said shock absorber (20) having:
- a first part (20a) opposite said first outer surface (12a) of the packaging body (1a);
- a second part (20b) opposite said second outer surface (12b) of the packaging body (1a), the second part being separated from the first part by said first recess (22);
the packaging for transporting and/or storing radioactive material being **characterized in that** the shock absorber has, associated with each of said first and second parts (20a, 20b), anti-sliding means enabling, in the event of a fall on the shock absorber (20), said at least one of the first and second parts (20a, 20b) to be held in relation to its associated outer surface (12a, 12b) of the packaging body, in a direction distancing it from the edge (14).

2. Packaging according to claim 1, **characterised in that** it is designed such that said recesses (22, 28), with the possible exception of the presence of stiffening ribs (60a, 60b), are left empty, and/or that these recesses (22, 28) are filled, at least partially, with a filler material.

3. Packaging according to claim 1 or claim 2, **characterised in that** the anti-sliding means associated with the first and/or second part (20a, 20b) of the shock absorber extend over a length, according to the direction of the edge (14), representing 70 to 100% of the length of said metal wall (30) along said direction.

4. Packaging according to any one of the previous claims, **characterised**
**in that** at least one of said first and second outer surfaces (12a, 12b) of the packaging body (1a) has a level break (40) between two portions (40a, 40b) of this outer surface, said level break being oriented towards said edge (14),
and **in that** said part (20a, 20b) of the shock absorber, opposite said outer surface (12a, 12b) including the level break (40), comprises a holding surface (44) for holding the shock absorber, cooperating with said level break (40),
and **in that** the level break (40) and the holding surface (44) form said anti-sliding means.

5. Packaging according to the previous claim, **characterised in that** said level break (40) is locally orthogonal to the outer surface (12a, 12b) that it defines, or inclined relative to the normal (42) to this outer surface of the packaging body.

6. Packaging according to any one of the previous claims, **characterised in that** said metal wall (30) is made from steel.

7. Packaging according to any one of the previous claims, **characterised in that** said metal wall (30) is substantially parallel to the edge (14).

8. Packaging according to any one of the previous claims, **characterised in that** at least one of the first and second recesses (22, 28) is passed through by at least one stiffening rib (60a, 60b), connected to said metal wall (30).

9. Packaging according to the previous claim, **characterised in that** the stiffening rib(s) (60a) arranged in the first recess (22) and the stiffening rib(s) (60b) arranged in the second recess (28) are arranged in different planes, preferably in staggered rows.

10. Packaging according to claim 8 or claim 9, **characterised in that** the stiffening rib(s) (60a) arranged in the first recess (22) and the stiffening rib(s) (60b) arranged in the second recess (28) are arranged substantially orthogonally to the metal wall (30).

11. Packaging according to any one of the previous claims, **characterised in that** it is designed such that said metal wall (30) is not passed through by the imaginary surface (S1) defined by all of the imaginary straight lines passing through the edge (14) and through the centre of gravity (G) of the packaging.

12. Packaging according to any one of the previous claims, **characterised in that** said shock absorber (20) is mounted in a removable manner onto the packaging body (1a), for example using shear pins and bolts.

13. Packaging according to any one of the previous claims, **characterised in that** the shock absorber (20) is a protection structure covering one corner (60) of the packaging body (1a), defined by at least three convergent edges (14) of the outer surface (12) of this body.

14. Packaging according to the previous claim, **characterised in that** it comprises a plurality of individual shock absorbers (20), each covering one corner (60) of the outer surface (12) of the packaging body (1a).

15. Packaging according to any one of the previous claims, **characterised in that** the packaging body (1a) has a generally polyhedral shape.
